# EUROPEAN PATENT APPLICATION

(11) **EP 1 188 762 A1**
(43) Date of publication of application: **20.03.2002**
(21) Application number: 00203166.4
(22) Date of filing: 14.09.2000
(51) Int. Cl.: C07F 11/00, C08F 4/69

(54) **Chromium complexes and their use for the polymerization of alpha-olefins**

(71) Applicant: Solvay Polyolefins Europe-Belgium (Société Anonyme), 1050 Bruxelles (BE); Université de Liège, B-4000 Liège (BE)
(72) Inventor: Noels, Alfred, 4030 Grivvegnee (Liege) (BE); Jan, Dominique, 4052 Beaufays (BE); Siberdt, Fabian, 1090 Bruxelles (BE)
(74) Representative: Destryker, Elise Martine

(57) **Abstract**

The invention concerns a chromium complex corresponding to the formula 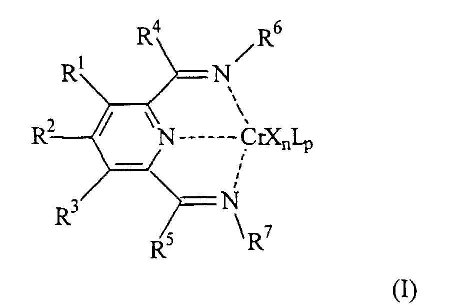 wherein :
each X is, independently, selected from the group of halogen, alkoxide, aryloxide, amide, phosphide, hydride, hydrocarbyl or substituted hydrocarbyl; each L is, independently, a neutral electron donor group which stabilizes the complex;
n is 2 or 3;
p is a number from 0 to 3;
R¹, R², R³, R⁴ and R⁵ are, independently, hydrogen, hydrocarbyl, substituted hydrocarbyl;
R⁶ and R⁷ are, independently, aryl or substituted aryl;
and its use for the polymerization of alpha-olefins.

## Description

The present invention concerns novel complexes of 2,6-pyridinebis(imines) and their use for the polymerization of alpha-olefins.

Late transition metal catalysts for the polymerization of alpha-olefins have been known for several years. WO 98/27124 discloses that ethylene may be polymerized by contacting it with Fe or Co complexes of selected 2,6-pyridinecarboxaldehydebis(imines) and 2,6-diacylpyridinebis(imines). WO 98/30612 discloses the use of the above mentioned Fe complexes as catalysts for the polymerization of propylene. WO 99/46303 reports the use of Fe, Co, Ru or Mn complexes of selected 2,6-pyridinecarboxaldehydebis(imines) and 2,6-diacylpyridinebis(imines) as catalyst components for the polymerization of alpha-olefins. These complexes are generally used at relatively low polymerization temperatures due to a certain instability at the usual polymerization temperatures.

We have now found new chromium complexes of pyridinebis(imines) which are suitable catalysts for the polymerization of alpha-olefins.

The invention is thus related to chromium complexes corresponding to the formula (I) 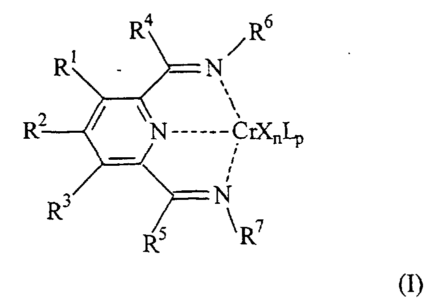 wherein :
each X is, independently, selected from the group of halogen, alkoxide, aryloxide, amide, phosphide, hydride, hydrocarbyl or substituted hydrocarbyl;
each L is, independently, a neutral electron donor group which stabilizes the complex;
n is 2 or 3;
p is a number from 0 to 3;
R¹, R², R³, R⁴ and R⁵ are, independently, a hydrogen atom, a hydrocarbyl group or a substituted hydrocarbyl group;
R⁶ and R⁷ are, independently, aryl or substituted aryl groups.

Preferred chromium complexes are those corresponding to formula (I) wherein :
R⁶ is an aryl group of the formula 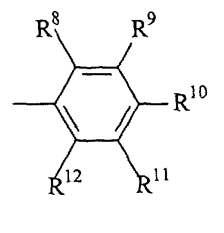
and R⁷ is an aryl group of the formula 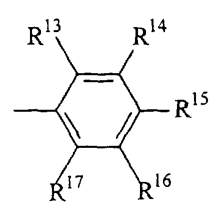 wherein :
R⁸ and R¹³ are, independently, a hydrocarbyl group or a substituted hydrocarbyl group;
R⁹, R¹⁰, R¹¹, R¹², R¹⁴, R¹⁵, R¹⁶ and R¹⁷ are, independently, a hydrogen atom, a hydrocarbyl group or a substituted hydrocarbyl group; and provided that any two of R⁸, R⁹, R¹⁰, R¹¹, R¹², R¹³, R¹⁴, R¹⁵, R¹⁶ and
R¹⁷ that are vicinal to one another, taken together may form a ring.

Especially preferred chromium complexes are those corresponding to formula (I) wherein R¹, R² and R³ are hydrogen atoms; R⁴ and R⁵ are each, independently, a hydrogen atom or an alkyl group containing from 1 to 6 carbon atoms; R⁶ is an aryl group of the formula 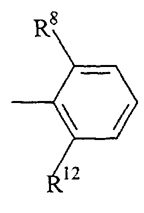 and R⁷ is an aryl group of the formula 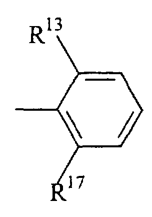 wherein :
R⁸ and R¹³ are, independently, an alkyl group containing up to 4 carbon atoms, and R¹² and R¹⁷ are, independently, a hydrogen atom or an alkyl group containing up to 4 carbon atoms.

Suitable chromium complexes are those corresponding to formula (I) wherein X is a halogen atom.

When the Cr atom in formula (I) is in the oxidation state II, n equals 2, and when the Cr atom in formula (I) is in the oxidation state III, n equals 3. Especially preferred are the chromium complexes wherein the Cr atom is in the oxidation state II and where n equals 2.

The neutral electron donor group(s) L include any neutral Lewis base compound(s) capable of donating an electron pair to the Cr atom in formula (I). Non-limiting examples include diethylether, trimethylamine, tetrahydrofuran, dimethylaniline, aniline, trimethylphosphine, n-butylamine, and the like. Particularly preferred Cr-complexes are those corresponding to formula (I) wherein the neutral electron donor group (L) is tetrahydrofuran. Preferred chromium complexes of formula (I) are those where p equals 0 or 1. Especially preferred are those wherein the neutral electron donor group (L) is tetrahydrofuran and wherein p equals 1.

The invention is also related to a process for the preparation of chromium complexes according to the invention. The chromium complexes according to the invention are generally prepared by reacting a Cr(II) or a Cr(III) salt, preferably a chloride, with a slight excess of the corresponding 2,6-bis(imino)pyridine. This process provides (I) with a very high yield. The reaction is preferably carried out in a solvent which can act as a Lewis donor group (L) stabilizing the complex. Good results have been obtained with tetrahydrofuran.

The chromium complexes according to the invention can be used as catalysts. They provide high activities when used for the polymerization of alpha-olefins. According to a third aspect, the present invention thus further concerns a polymerization process wherein at least one alpha-olefin is contacted with a catalyst system comprising
(a) a chromium complex according to the invention, and
(b) an activator.

The activator is generally selected from the (i) aluminoxanes, from (ii) organoaluminium compounds corresponding to the general formula (II),

AlZₓ(Y)_{y}X'_{z} (II)

wherein :
- Z is a hydrocarbyl group containing from 1 to 8 carbon atoms;
- Y is a group chosen from -OR', -SR' et NR'R" wherein R' and R" are, independently, a hydrocarbyl group containing from 1 to 35 carbon atoms;
- X' is a halogen atom;
- x is a number such that 0 < x ≤ 3;
- y is a number such that 0 ≤ y < 3;
- z is a number such that 0≤*z*≤3, and provided that x + y + z = 3;
and their mixtures.

By aluminoxanes (i) herein is meant compounds corresponding to the general formulae R¹⁸-(AlR¹⁸O)ₘ-AlR¹⁸₂ and cyclic compounds corresponding to the general formula (-AlR¹⁸O-)ₘ₊₂ wherein m is a number from 1 to 40 and R¹⁸ is an alkyl or aryl group containing from 1 to 12 carbon atoms. Methyl-, ethyl-, isobutylaluminoxanes and their mixtures, especially those wherein m is a number from 2 to 20, are preferred. Methylaluminoxane, and particularly methylaluminoxane wherein m is a number from 10 to 18, is especially preferred. The aluminoxanes have been known for years as cocatalysts for single site catalysts. They are described for instance in "Metallocene-based polyolefins", volume 1, 1999, J. Scheirs and J. Kaminsky, p.33-67. Commercially available aluminoxanes often contain some trialkylaluminium stemming from their synthesis and are generally purchasable as a solution.

Preferred organoaluminium compounds (ii) corresponding to formula (II) are those wherein x is equal to 3, and Z is a linear or branched alkyl group containing from 1 to 6 carbon atoms, also called trialkylaluminiums. Illustrative examples of trialkylaluminiums are trimethylaluminium, triethylaluminium and tri-isobutylaluminium.

The amount of activator (b) used in the polymerization process according to the invention depends on the type of activator which is used . In case the activator (b) is an aluminoxane (i), the amount of activator is generally such that the atomic ratio of the total aluminium from the aluminoxane to the Cr atom from the Cr-complex (a) is in the range from 10 to 100 000. Preferably, said ratio is not lower than 100. A ratio not lower than 500 is especially preferred. Preferably, said ratio is not higher than 20 000. A ratio not higher than 10 000 is especially preferred.

When the activator is an organoaluminium compound (ii) corresponding to formula (II), the amount of activator is generally such that the atomic ratio of the aluminium from (II) to the Cr atom from the Cr-complex (a) is in the range from 2 to 2000. Preferably, said ratio is not lower than 5. A ratio not lower than 10 is especially preferred. Preferably, said ratio is not higher than 1000. A ratio not higher than 500 is especially preferred.

In case the activator is an organoaluminium compound (ii) of formula (II), an ionizing agent may also be added to the catalytic system. This ionizing agent can be chosen from the compounds comprising a first part which has the properties of a Lewis acid and which is capable of ionizing the Cr-complex (a) and a second part which is inert towards the ionized Cr-complex. Illustrative examples of ionizing agents are triphenylcarbenium tetrakis(pentafluorophenyl)borate, N,N-dimethylanilinium tetrakis(pentafluorophenyl)borate, tri(n-butyl)ammonium tetrakis(pentafluorophenyl)borate, tri(pentafluorophenyl)borane, triphenylborane, trimethylborane and tri(trimethylsilyl)borane.

The ionizing agent is preferably triphenylcarbenium tetrakis(pentafluorophenyl)borate. The amount of ionizing agent is often such that the molar ratio of the ionizing agent to the chromium complex (a) is in the range from 0.1 to 20. Preferably, said ratio is in the range from 0.9 to 10. Good results have been obtained with ratios from 1 to 3.

The alpha-olefins can be chosen from those containing from 2 to 20, preferably from 2 to 8, carbon atoms. Examples of alpha-olefins are ethylene, propylene, 1-butene, 1-pentene, 1-hexene, 1-octene. Other monomers copolymerizable with the alpha-olefin can also be used.

The polymerization process according to the present invention can be a continuous or a batch process, a solution or a suspension process in a hydrocarbon diluent, a bulk suspension process or a gas phase process.

The temperature at which is carried out the polymerization process according to the present invention is generally in the range from -50°C to +300°C, most often from 0 to 130°C. Preferably, the polymerization temperature is at least 30°C and not higher than 115°C.

The total pressure at which the process according to the present invention is carried out is generally in the range from atmospheric pressure to 100 10⁵ Pa, preferably between 1 10⁵ and 55 10⁵ Pa.

The polymerization process according to the present invention is particularly suitable for the manufacturing of ethylene polymers, and more particularly convenient for the manufacturing of ethylene homo- and copolymers containing at least 90 mole% of ethylene units. In these ethylene copolymers, the preferred comonomers are alpha-olefins containing from 3 to 8 carbon atoms. Butene-1 and /or hexene-1 are especially preferred. In this case, the polymerization is preferably carried out in a hydrocarbon diluent. The hydrocarbon diluent is generally selected from aliphatic hydrocarbons containing from 3 to 10 carbon atoms. The preferred diluent is chosen from propane, isobutane, hexane or their mixtures.

The objects of the present invention are illustrated in the following examples. The measurement methods and the symbols used in these examples are explained below.

THF stands for tetrahydrofuran.

MAO stands for methylalumoxane.

IR spectra were taken on KBr disks with a Perkin Elmer FTIR 1720X spectrometer having a resolution of 2 cm⁻¹; (m) and (s) mean respectively medium and strong absorption peaks.

NMR spectra were taken on a Brucker AM 400 NMR spectrometer with a magnetic field strength of 9.4 Tesla (¹H : 400 MHz, ¹³C : 100 MHz).

The activity is defined as the amount of polyolefin obtained in kg per mole of Cr, per Pa ethylene and per hour of polymerization.

HLMI is the melt flow index of the polyolefin in g/10 min, measured according to ASTM D 1238 (1998) at 190°C and under a charge of 21.6 kg.

### Example 1

### A. Preparation of CrCl₂(THF)_{1.5}

This compound has been obtained by extensive Soxhlet extraction with THF of the commercially available anhydrous CrCl₂ as described by R. Messere; Ph. D. University of Liège, 1996. It is extremely hygroscopic and should be stored under inert atmosphere.

### B. Preparation of 2,6-bis[1-(2,6-diisopropylphenylimino)ethyl]pyridine chromium(II)chloride

0.52 g (2.20 mmole) of CrCl₂(THF)_{1.5} were transferred under inert atmosphere into a Schlenk flask and 30 ml of THF were added. The green suspension was stirred during a few minutes at room temperature. Then 1.08 g (2.25 mmole) of 2,6-bis[1-(2,6-diisopropylphenylimino)ethyl]pyridine (prepared as described in B.L. Small, M. Brookhart and A.M.A. Bennett in J. Am. Chem. Soc., 1998, volume 120, p. 4049) were added under argon. The solution became violet as the chromium (II) chloride was dissolved, followed by the formation of a dark precipitate. The suspension was then stirred during two hours at room temperature. The mixture was concentrated to one third of its volume and 40 ml of diethylether was added to allow complete precipitation. After filtration and three washings with 30 ml of ether, the violet solid was dried under vacuum to yield 1.35 g (99%) of 2,6-bis[1-(2,6-diisopropylphenylimino)ethyl]pyridine-chromium(II)chloride, the colour of which slowly turned from violet to green under argon, probably due to the loss of THF. Typical IR peaks (KBr, cm⁻¹) were as follows : 3064 (m), 2965 (s), 2928 (s), 2867 (s), 1617 (m), 1579 (s), 1465(s), 1441 (s), 1371 (s), 1270 (m), 1103 (m), 800 (s), 777 (s).

### C. Polymerization of ethylene in the presence of 2,6-bis[1-(2,6-diisopropylphenylimino)ethyl]pyridinechromium(II)chloride

A glass reactor of type Büchi « Miniclave » (equipped with a magnetic stirrer) was conditioned by 3 cycles vacuum-argon, followed by heating under argon flow to 100°C and cooling under slight argon flow until a reactor temperature of 70°C was reached. A solution containing 1 µmole of 2,6-bis[1-(2,6-diisopropylphenylimino)ethyl]pyridinechromium(II)chloride as prepared in (B) and 35 ml of toluene was introduced into the reactor via a reactor inlet by means of a canula. MAO is added via a syringe such that the atomic ratio of the Al/Cr equals 800. After 3 successive pressurizations and depressurizations under an ethylene pressure of 3 10⁵ Pa to remove the argon, ethylene was added to obtain a constant pressure of 10 10⁵ Pa. After 1 hour of polymerization, the reactor is cooled down to room temperature. Its content is then poured into 500 ml of acidified (with about 3 ml of a 5% HF solution) methanol. The resulting polymer was filtered on a Büchner and then dried overnight under vacuum. An activity of 190 10⁻⁵ kg/mole.Pa.h was obtained.

### Example 2

### A. Preparation of CrCl₃(THF)₃

Step A of example 1 was repeated by replacing the CrCl₂ by CrCl₃.

### B. Preparation of 2,6-bis[1-(2,6-diisopropylphenylimino)ethyl]pyridine chromium(III)chloride

0.20 g of CrCl₃(THF)₃ as prepared in step A were introduced under argon into a Schlenk flask, followed by the addition of 10 ml of THF. 0.27 g (0.56 mmole) of 2,6-bis[1-(2,6-diisopropylphenylimino)ethyl]pyridine were added to the mauve suspension. The solution turned to pale pink as the Cr(III) chloride dissolved. After 18 hours at room temperature, the supernatant was brown and a pale pink precipitate was formed. After concentration of the suspension, 20 ml of diethylether were added. The pink solid was filtered and washed twice with 20 ml of ether. A yield of 0.12 g (35%) was obtained. The colour of the solid changed progressively from pale pink to very bright green, probably due to the loss of THF. Typical ¹H NMR peaks (CDCl₃, ppm) were as follows : 8.59 (s wide, 2H, CHₘₑₜₐ pyridine), 8.02 (s wide, 1H, CHₚₐᵣₐ pyridine), 7.24 (s wide, 6H, CHₐᵣₒₘ), 2.85 (s wide, 4H, CH(Me)₂), 2.36 (s wide, 6H, NCCH₃), 1.25 (s wide, 24H, CH(CH₃)₂).

### C. Polymerization of ethylene in the presence of 2,6-bis[1-(2,6-diisopropylphenylimino)ethyl]pyridinechromium(III)chloride

Step C of example 1 was repeated except that the 1 µmole of 2,6-bis[1-(2,6-diisopropylphenylimino)ethyl]pyridinechromium(II)chloride was replaced by 10 µmole of 2,6-bis[1-(2,6-diisopropylphenylimino)ethyl]pyridine chromium(III)chloride as prepared in step (B) and that the polymerisation temperature was 30°C.

An activity of 4.4 10⁻⁵ kg/mole.Pa.h has been measured.

### Example 3

Example 1 was repeated except that in step C the polymerization temperature was 30°C instead of 70°C and that the methylaluminoxane was replaced by a mixture of triethylaluminium and tetrakis(pentafluorophenyl) tritylborate in a molar ratio of 40/1 and with an atomic ratio of Al from the triethylaluminium to the Cr from the 2,6-bis[1-(2,6-diisopropylphenylimino)ethyl]pyridinechromium(II)chloride of 40. An activity of 45 10⁻⁵ kg/mole.Pa.h has been measured.

### Example 4

### A. Preparation of 2,6-bis[1-(2,6-dimethylphenylimino)ethylpyridine

The preparation of this ligand has been described by Cetinkaya B., Cetinkaya E., Brookhart M., White P. in J. Mol. Catal. A Chem., 1999, volume 142, p. 101.

### B. Preparation of 2,6-bis[1-(2,6-dimethylphenylimino)ethyl]pyridine chromium(II)chloride

This complex was obtained analogously to step B of example 1, using 0.24 g (1.95 mmole) of anhydrous CrCl₂ as described in Ex. 1.A and 0.79 g (2.14 mmole) of 2,6-bis[1-(2,6-dimethylphenylimino)ethylpyridine. A microcristalline blue solid was obtained with a yield of 1.03 g (94 %). Typical ¹H NMR peaks (CD₃OD, ppm) were as follows: 8.33 (s wide, 2H, CHₘₑₜₐ pyridine), 7.97 (s wide, 1H, CHₚₐᵣₐ pyridine), 7.00 (s wide, 4H, CHₘₑₜₐ), 6.87 (s wide, 4H, CHₚₐᵣₐ), 3.64 (s wide, 4H, THF_{α}), 2.17 (s wide, 6H, NCCH₃), 1.97 (s wide, 12H, ArCH₃), 1.79 (s wide, 4H, THF β). Typical ¹³C NMR peaks (CD₃OD, ppm) were as follows : 169.83 (C=N), 156.37, 149.37, 139.03, 129.69, 129.08, 126.56, 124.70 (Cₐᵣₒₘ), 68.90 (C THF_{α}), 26.49 (C THF _{β}), 18.06, 18.03 (ArCH₃), 17.83 (NCCH₃). Typical IR peaks (KBr, cm⁻¹) were as follows : 3077 (m), 3011 (m), 2944 (m), 2915 (s), 2863 (m), 1609 (m), 1580 (s), 1470 (s), 1374 (s), 1274 (s), 1218 (s), 807 (s), 774 (s).

### C. Polymerization of ethylene in the presence of 2,6-bis[1-(2,6-dimethylphenylimino)ethyl]pyridinechromium(II)chloride

Example 1 was repeated except that the 2,6-bis[1-(2,6-diisopropylphenylimino)ethyl]pyridinechromium(II)chloride was replaced by 2,6-bis[1-(2,6-dimethylphenylimino)ethyl]pyridinechromium(II)chloride as prepared in step (B).

An activity of 185.2 10⁻⁵ kg/mole.Pa.h has been measured.

### Example 5

Example 3 was repeated except that the 2,6-bis[1-(2,6-diisopropylphenylimino)ethyl]pyridinechromium(II)chloride was replaced by 2,6-bis[1-(2,6-dimethylphenylimino)ethyl]pyridinechromium(II)chloride as prepared in Example 4.B and a polymerization temperature of 70°C instead of 30°C was used.

An activity of 159.8 10⁻⁵ kg/mole.Pa.h has been measured.

### Examples 6-8

Example 1 was repeated except that in step C the polymerization temperature was 30°C and that the MAO was replaced by, respectively, diisobutylaluminium chloride (atomic ratio Al/Cr : 20/1); diethylaluminium chloride (atomic ratio Al/Cr: 20/1) and triethylaluminium (atomic ratio Al/Cr : 40/1).
Activities of, respectively, 1.2 10⁻⁵ (ex. 6); 0.9 10⁻⁵ (ex. 7) and 7.0 10⁻⁵ (ex.8) were measured.

### Example 9-14

### A. Active species formation

A toluene suspension of the organometallic complex (see Table I) is treated by MAO (10 % wt in toluene solution). The resulting solution is stirred for approximately 15 minutes.

### B. Polymerization

In a dry 5 liters autoclave, provided with an agitator, one introduces under sweeping of dry nitrogen, MAO (10 % wt in toluene solution) and 1800 ml of isobutane.

The temperature is raised either to 50 or 70°C and hydrogen (if any) is added in order to obtain the desired gas phase H₂/C₂ molar ratio. Ethylene is then introduced till obtaining a partial pressure of ethylene of 10 10⁵ Pa.

The polymerization is started by flushing the active species/MAO solution prepared in step A with 200 ml of isobutane.

The temperature, partial pressure in ethylene and H₂/C₂ ratio are kept constant over the polymerization period (usually 1 hour; 20 min in ex. 12 and 13). The reaction is stopped by cooling down, then venting the reactor.

In example 14, a mixture of ethylene and propylene was used and hexane was used instead of isobutane.

The polymerization conditions and the results obtained are presented in Table I.

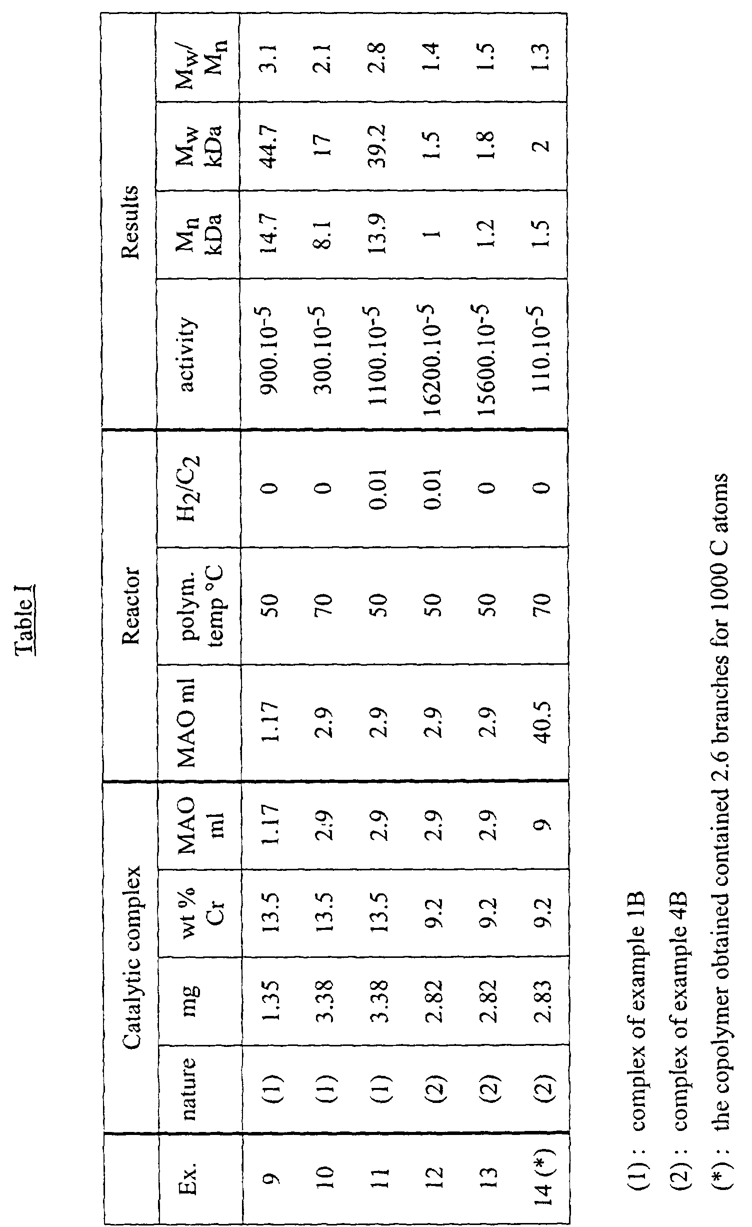

## Claims

1. A chromium complex corresponding to the formula 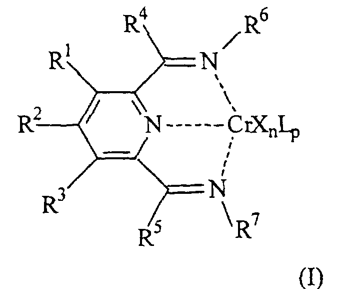 wherein :
each X is, independently, selected from the group of halogen, alkoxide, aryloxide, amide, phosphide, hydride, hydrocarbyl or substituted hydrocarbyl; each L is, independently, a neutral electron donor group which stabilizes the complex;
n is 2 or 3;
p is a number from 0 to 3;
R¹, R², R³, R⁴ and R⁵ are, independently, a hydrogen atom, a hydrocarbyl group or substituted hydrocarbyl group;
R⁶ and R⁷ are, independently, aryl or substituted aryl.

2. A chromium complex according to claim 1, wherein :
R⁶ is an aryl group of the formula 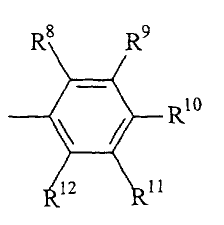
and R⁷ is an aryl group of the formula 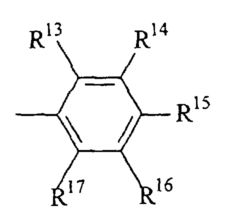 wherein :
R⁸ and R¹³ are, independently a hydrocarbyl group or a substituted hydrocarbyl group;
R9, R¹⁰, R¹¹, R¹², R¹⁴, R¹⁵, R¹⁶ and R¹⁷ are, independently, a hydrogen atom, a hydrocarbyl group or a substituted hydrocarbyl group; and provided that any two of R⁸, R⁹, R¹⁰, R¹¹, R¹², R¹³, R¹⁴, R¹⁵, R¹⁶ and R¹⁷ that are vicinal to one another, taken together may form a ring.

3. A chromium complex according to claim 2, wherein
R¹, R² and R³ are hydrogen atoms;
R⁴ and R⁵ are, independently, a hydrogen atom or an alkyl group containing from 1 to 6 carbon atoms;
R⁶ is an aryl group of the formula 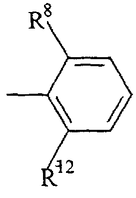
and R⁷ is an aryl group of the formula 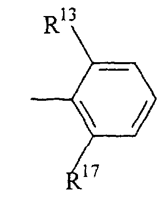 wherein :
R⁸ and R¹³ are, independently, an alkyl group containing up to 4 carbon atoms,
and R¹² and R¹⁷ are, independently, a hydrogen atom or an alkyl group containing up to 4 carbon atoms.

4. The chromium complex according to anyone of claims 1 to 3, wherein X is a halogen atom.

5. The chromium complex according to anyone of claims 1 to 4, wherein L is tetrahydrofuran and p equals 1.

6. The chromium complex according to anyone of claims 1 to 4, wherein p equals 0.

7. A process for the polymerization of alpha-olefins wherein at least one alpha-olefin is contacted with a catalyst system comprising
(a) a chromium complex according to anyone of claims 1 to 6, and
(b) an activator

8. A process according to claim 7 wherein the activator (b) is selected from (i) aluminoxanes, from (ii) organoaluminium compounds corresponding to the general formula (II),
AlZₓ(Y)_{y}X'_{z} (II)
wherein :
- Z is a hydrocarbyl group containing from 1 to 8 carbon atoms;
- Y is a group chosen from -OR', -SR' et NR'R" wherein R' and R" are, independently, a hydrocarbyl group containing from 1 to 35 carbon atoms;
- X' is a halogen atom;
- x is a number such that 0 < x ≤ 3;
- y is a number such that 0 ≤ y < 3;
- z is a number such that 0 ≤ z < 3, and provided that x + y + z = 3.
and their mixtures.

9. A process according to anyone of claims 7 or 8, wherein the polymerization is carried out at a temperature from -50 to 300°C and under a pressure of 1 to 100 10⁵Pa.

10. A process according to anyone of claims 7 to 9 applied to the manufacturing of homo- or copolymers of ethylene comprising at least 90 mole% of units derived from ethylene.
